# EUROPÄISCHE PATENTANMELDUNG

(11) **EP 4 606 473 A1**
(43) Veröffentlichungstag der Anmeldung: **27.08.2025**
(21) Anmeldenummer: 25154737.8
(22) Anmeldetag: 29.01.2025
(51) Int. Cl.: B01J 20/30

(54) **VORLÄUFERVERBINDUNG FÜR EIN MANGANBASIERTES LITHIUM-SORBENS, MANGANBASIERTES LITHIUM-SORBENS UND VERFAHREN ZUR HERSTELLUNG**

(30) Priorität: 12.02.2024 DE 102024103777
(71) Anmelder: EnBW Energie Baden-Württemberg AG, 76131 Karlsruhe (DE)
(72) Erfinder: Herrmann, Laura, 76227 Karlsruhe (DE); Jeschull, Fabian, 76133 Karlsruhe (DE); Binder, Joachim, 76227 Karlsruhe (DE); Bohn, Nicole, 76689 Karlsdorf-Neuthard (DE)
(74) Vertreter: DREISS Patentanwälte PartG mbB

(57) **Zusammenfassung**

Die Erfindung betrifft ein Verfahren zur Herstellung einer Vorläuferverbindung (34) für ein manganbasiertes Lithium-Sorbens (12), wobei ein Ausgangsfluid (14) bereitgestellt wird, das ein Lithiumsalz und ein Mangansalz umfasst, wobei das Ausgangsfluid sprühgetrocknet wird, und wobei ein dabei erhaltenes Trocknungsgut (28) kalziniert wird, sodass eine Lithiummanganoxid-Partikel (36) umfassende Vorläuferverbindung erhalten wird. Die Erfindung betrifft außerdem ein Verfahren zur Herstellung eines manganbasierten Lithium-Sorbens, eine Vorläuferverbindung für ein manganbasiertes Lithium-Sorbens und ein manganbasiertes Lithium-Sorbens.

## Beschreibung

Die vorliegende Erfindung betrifft das Gebiet der Lithiumextraktion. Insbesondere betrifft die vorliegende Erfindung ein Verfahren zur Herstellung einer Vorläuferverbindung für ein manganbasiertes Lithium-Sorbens, ein Verfahren zur Herstellung eines manganbasierten Lithium-Sorbens, eine Vorläuferverbindung für ein manganbasiertes Lithium-Sorbens und ein manganbasiertes Lithium-Sorbens.

Aufgrund ihrer Vorzüge wie beispielsweise einer hohen elektrischen Energiedichte, einer hohen elektrischen Arbeitsspannung, einer langen zyklischen Lebensdauer, dem fehlenden Memoryeffekt usw. ist die wiederaufladbare Lithiumionen-Batterie bzw. der Lithiumionen-Akkumulator in elektrischen Geräten wie Laptops, Mobiltelefonen und Elektroautos inzwischen weit verbreitet. Die Nachfrage nach Lithium steigt unter anderem aufgrund des Ausbaus der Elektromobilität stark an.

Es ist bekannt, Lithium aus lithiumhaltigen Fluiden bzw. Solen durch Extraktion zu gewinnen. Hierzu wird das lithiumhaltige Fluid bzw. die lithiumhaltige Sole durch ein Lithium-Sorbens geleitet, das in dem Fluid bzw. der Sole enthaltenes Lithium bindet. In einem anschließenden Desorptionsschritt wird das gebundene Lithium von dem Lithium-Sorbens desorbiert. Es sind verschiedene Arten von Lithium-Sorbenzien bekannt, beispielsweise manganbasierte Lithium-Sorbenzien, titanbasierte Lithium-Sorbenzien oder Lithium-Sorbenzien, die auf einem Aluminium Layered Double Hydroxide (Al-LDH) basieren.

Manganbasierte Lithium-Sorbenzien weisen typischerweise Wasserstoffmanganoxid-Partikel auf. Solche Sorbenzien binden Lithiumionen unter Abgabe von Wasserstoffionen. Der Bindung von Lithium bzw. Lithiumionen durch manganbasierte Lithium-Sorbenzien liegt also ein Ionenaustausch zugrunde. Es bilden sich dabei Lithiummanganoxid-Partikel aus den Wasserstoffmanganoxid-Partikeln. Gebundenes Lithium kann durch ein Elutionsfluid desorbiert werden. Dabei werden gebundene Lithiumionen durch Wasserstoffionen ersetzt, sodass die Wasserstoffmanganoxid-Partikel regeneriert werden.

Manganbasierte Lithium-Sorbenzien werden typischerweise durch eine hydrothermale Synthese hergestellt. Eine hydrothermale Synthese ist eine heterogene Reaktion in einem wässrigen Medium bei erhöhter Temperatur und erhöhtem Druck. Hydrothermale Synthesen sind schwer zu skalieren und deshalb für die großtechnische Fertigung von manganbasierten Lithium-Sorbenzien nur wenig geeignet.

Die Erfindung beschäftigt sich mit der Aufgabe, die Skalierbarkeit von Verfahren zur Herstellung von manganbasierten Lithium-Sorbenzien zu verbessern. Die hergestellten Lithium-Sorbenzien sollen bei der Verwendung in der Lithiumextraktion zudem eine hohe Resistenz gegenüber einem Auswaschen von Mangan haben.

Erfindungsgemäß ist ein Verfahren zur Herstellung einer Vorläuferverbindung für ein manganbasiertes Lithium-Sorbens mit den Merkmalen des Anspruchs 1 vorgesehen.

Das erfindungsgemäße Verfahren zur Herstellung der Vorläuferverbindung umfasst das Bereitstellen eines Ausgangsfluids, das wenigstens ein Lithiumsalz und wenigstens ein Mangansalz umfasst. Das erfindungsgemäße Verfahren zur Herstellung der Vorläuferverbindung umfasst außerdem das Sprühtrocknen des Ausgangsfluids, wobei ein lithiumhaltiges und manganhaltiges Trocknungsgut erhalten wird. Das erfindungsgemäße Verfahren zur Herstellung der Vorläuferverbindung umfasst ferner das Kalzinieren des Trocknungsguts, wobei eine Lithiummanganoxid-Partikel umfassende Vorläuferverbindung für ein manganbasiertes Lithium-Sorbens erhalten wird. Die Herstellung der Vorläuferverbindung erfolgt also durch Sprühtrocknen und anschließendes Kalzinieren des durch Sprühtrocknen erhaltenen Trocknungsguts. Vorzugsweise umfasst das Kalzinieren der Vorläuferverbindung eine Oxidation der Vorläuferverbindung. Alternativ oder zusätzlich umfasst das Kalzinieren der Vorläuferverbindung vorzugsweise eine Umkristallisation der Vorläuferverbindung.

Das vorgeschlagene Verfahren hat den Vorteil, dass die einzelnen Verfahrensschritte leicht skalierbar sind und sich deshalb für großtechnische Anwendungen gut eignen. Überraschenderweise hat sich zudem gezeigt, dass durch Sprühtrocknen und anschließendes Kalzinieren eine Vorläuferverbindung erhalten werden kann, die letztlich sogar zu einem Lithium-Sorbens mit besonders vorteilhaften Eigenschaften führt. Insbesondere zeichnet sich das erhaltene Lithium-Sorbens dadurch aus, dass es weitgehend resistent gegenüber einem Auswaschen von Mangan ist.

In einigen Ausführungsformen des Verfahrens zur Herstellung der Vorläuferverbindung wird als Ausgangsfluid ein wässriges Ausgangsfluid bereitgestellt bzw. verwendet. Das Ausgangsfluid weist also Wasser als einzigen flüssigen Bestandteil oder als einen von mehreren flüssigen Bestandteilen auf.

Vorzugsweise sind das Lithiumsalz und/oder das Mangansalz in dem Ausgangsfluid gelöst. Dies führt zu einer besonders homogenen Durchmischung von Lithium und Mangan in dem Trocknungsgut. Alternativ können das Lithiumsalz und/oder dass Mangansalz in dem Ausgangsfluid suspendiert sein. Vorzugsweise weist das Mangan in dem Ausgangsfluid die Oxidationsstufe +2 auf.

Sprühtrocknen ist ein Verfahren, bei dem ein Ausgangsfluid in eine Trocknungskammer eingesprüht wird. In der Trocknungskammer wird das eingesprühte Ausgangsfluid durch einen Heißgasstrom getrocknet, wodurch ein feines Pulver, das sogenannte Trocknungsgut, erhalten wird. Je nach Bauart der Trocknungskammer kann der Heißgasstrom in Richtung mit dem eingesprühten Ausgangsfluid oder gegen das eingesprühte Ausgangsfluid strömen.

Kalzinieren ist ein Verfahren, bei dem eine Substanz in einer oxidierenden Atmosphäre erhitzt wird, also in einer Atmosphäre, die wenigstens ein Oxidationsmittel umfasst. Vorzugsweise ist das Oxidationsmittel Sauerstoff. Die oxidierende Atmosphäre kann beispielsweise durch Luft oder durch reinen Sauerstoff gebildet sein.

In einigen bevorzugten Ausführungsformen ist vorgesehen, dass das Trocknungsgut derart kalziniert wird, dass die durchschnittliche Oxidationsstufe von Mangan in der Vorläuferverbindung zwischen +3,8 und +4,0 beträgt, vorzugsweise zwischen +3,9 und +4,0. Folglich ist die allgemeine Summenformel der Lithiummanganoxid-Partikel LiₓMn_{2-x/4}O₄ oder etwa LiₓMn_{2-x/4}O₄.

In einigen bevorzugten Ausführungsformen ist vorgesehen, dass das Stoffmengenverhältnis von Lithium zu Mangan in dem Ausgangsfluid zwischen 0,6:1 und 1,4:1 beträgt, vorzugsweise zwischen 0,8:1 und 1,2:1. Solche Stoffmengenverhältnisse ermöglichen die Herstellung von manganbasierten Lithium-Sorbenzien mit einer hohen Aufnahmefähigkeit für Lithium. Besonders bevorzugt ist das Stoffmengenverhältnis von Lithium zu Mangan 1:1. Dadurch kann das besonders bevorzugte manganbasierte Lithium-Sorbens mit der Summenformel H_{1.6}Mn_{1.6}O₄ bzw. dessen Vorläufersubstanz mit der Summenformel Li_{1.6}Mn_{1.6}O₄ erhalten werden.

In einigen bevorzugten Ausführungsformen ist vorgesehen, dass das Trocknungsgut bei einer vorgegebenen Kalzinierungstemperatur von wenigstens 300 °C, vorzugsweise wenigstens 350 °C, kalziniert wird. Eine solche Kalzinierungstemperatur ermöglicht eine zeiteffiziente Oxidation des Trocknungsguts. Vorzugsweise wird das Trocknungsgut für eine vorgegebene Kalzinierungsdauer von höchstens 10 h kalziniert.

In einigen bevorzugten Ausführungsformen ist vorgesehen, dass die vorgegebene Kalzinierungstemperatur wenigstens 400 °C und höchstens 500 °C beträgt. Dieser Temperaturbereich hat den Vorteil, dass überwiegend Lithiummanganoxid-Partikel erhalten werden, welche die gewünschte Kristallstruktur vom Spinelltyp aufweisen. Besonders bevorzugt beträgt die vorgegebene Kalzinierungstemperatur wenigstens 430 °C und höchstens 470 °C.

In einigen bevorzugten Ausführungsformen ist vorgesehen, dass die vorgegebene Kalzinierungstemperatur wenigstens 600 °C beträgt und höchstens 800 °C. Bei diesem Temperaturbereich werden neben den Lithiummanganoxid-Partikeln, welche die gewünschte Kristallstruktur vom Spinelltyp aufweisen, auch solche Lithiummanganoxid-Partikel erhalten, die eine Schichtstruktur aufweisen. Die Kalzinierung läuft jedoch schnell bzw. zeiteffizient ab und die Lithiummanganoxid-Partikel mit der Schichtstruktur können in einem nachgeordneten Verfahrensschritt ausgewaschen werden, wobei die Lithiummanganoxid-Partikel mit der gewünschten Kristallstruktur vom Spinelltyp zurückbleiben.

In einigen bevorzugten Ausführungsformen ist vorgesehen, dass das Ausgangsfluid Lithiumacetat oder Lithiumnitrat als Lithiumsalz umfasst. Lithiumacetat hat den Vorteil, dass die Acetat-Ionen bzw. aus den Acetat-Ionen gebildete Essigsäure während des Sprühtrocknens entfernt bzw. verdampft werden. Folglich sind in dem Trocknungsgut allenfalls Spuren von Anionen des eingesetzten Lithiumsalzes vorhanden. Lithiumacetat hat zudem den Vorteil, dass es kostengünstig erhältlich ist und eine hohe Löslichkeit in Wasser bzw. in Wasser enthaltenen Gemischen aufweist. Lithiumnitrat hat den Vorteil, dass die Löslichkeit in Wasser bzw. in Wasser enthaltenden Gemischen verglichen mit Lithiumacetat noch höher ist.

Das Bereitstellen des Ausgangsfluids umfasst vorzugsweise das Bereitstellen des Lithiumsalzes, besonders bevorzugt Lithiumacetat, insbesondere als Lithiumacetat Dihydrat, oder Lithiumnitrat, als Ausgangsmaterial. Das bereitgestellte Lithiumsalz wird dann zur Bereitstellung des Ausgangsfluids zu einer Flüssigkomponente des Ausgangsfluids, vorzugsweise Wasser oder ein Wasser aufweisendes Flüssigkeitsgemisch, gegeben. Vorzugsweise wird das Lithiumsalz in der Flüssigkomponente vollständig gelöst.

Vorzugsweise beträgt die Konzentration an Lithiumionen in dem Ausgangsfluid wenigstens 10 g/l, bevorzugt wenigstens 15 g/l, besonders bevorzugt wenigstens 20 g/l.

Liegt das Lithiumsalz in dem Ausgangsfluid gelöst vor, so wird die maximale Konzentration an Lithiumionen durch die in dem Ausgangsfluid vorhandenen Anionen und durch die Temperatur des Ausgangsfluids beeinflusst. Vorzugsweise ist das Lithiumsalz in dem Ausgangsfluid vollständig gelöst, wobei die Konzentration an Lithiumionen in dem Ausgangsfluid höchstens 100 g/l beträgt, bevorzugt höchstens 75 g/l, besonders bevorzugt höchstens 50 g/l. Das Ausgangsfluid ist dabei vorzugsweise ein wässriges Ausgangsfluid. Insbesondere weist das Ausgangsfluid Wasser als einzigen flüssigen Bestandteil auf.

In einigen bevorzugten Ausführungsformen ist vorgesehen, dass das Ausgangsfluid Manganacetat, besonders bevorzugt Mangan(II)-acetat, oder Mangannitrat, besonders bevorzugt Mangan(II)-nitrat, als Mangansalz umfasst. Manganacetat hat den Vorteil, dass die Acetat-Ionen bzw. aus den Acetat-Ionen gebildete Essigsäure während des Sprühtrocknens entfernt bzw. verdampft werden. Folglich sind in dem Trocknungsgut allenfalls Spuren von Anionen des Mangansalzes vorhanden. Manganacetat hat zudem den Vorteil, dass es kostengünstig erhältlich ist und eine hohe Löslichkeit in Wasser bzw. in Wasser enthaltenen Gemischen aufweist. Mangannitrat hat den Vorteil, dass die Löslichkeit in Wasser bzw. in Wasser enthaltenden Gemischen verglichen mit Manganacetat noch höher ist.

Das Bereitstellen des Ausgangsfluids umfasst vorzugsweise das Bereitstellen des Mangansalzes, vorzugsweise Manganacetat, besonders bevorzugt Mangan(II)-acetat, oder Mangannitrat, besonders bevorzugt Mangan(II)-nitrat, als Ausgangsmaterial. Das bereitgestellte Mangansalz wird dann zur Bereitstellung des Ausgangsfluids zu einer Flüssigkomponente des Ausgangsfluids, vorzugsweise Wasser oder ein Wasser aufweisendes Flüssigkeitsgemisch, gegeben. Vorzugsweise wird das Mangansalz in der Flüssigkomponente vollständig gelöst. Vorzugsweise beträgt die Konzentration an Manganionen in dem Ausgangsfluid wenigstens 80 g/l, bevorzugt wenigstens 120 g/l, besonders bevorzugt wenigstens 160 g/l.

Liegt das Mangansalz in dem Ausgangsfluid gelöst vor, so wird die maximale Konzentration an Manganionen durch die in dem Ausgangsfluid vorhandenen Anionen und durch die Temperatur des Ausgangsfluids beeinflusst. Vorzugsweise ist das Mangansalz in dem Ausgangsfluid vollständig gelöst, wobei die Konzentration an Manganionen in dem Ausgangsfluid höchstens 800 g/l beträgt, bevorzugt höchstens 600 g/l, besonders bevorzugt höchstens 400 g/l. Das Ausgangsfluid ist dabei vorzugsweise ein wässriges Ausgangsfluid. Insbesondere weist das Ausgangsfluid Wasser als einzigen flüssigen Bestandteil auf.

Vorzugsweise umfasst das Ausgangsfluid Lithiumacetat als Lithiumsalz und Manganacetat als Mangansalz. Alternativ dazu umfasst das Ausgangsfluid vorzugsweise Lithiumnitrat als Lithiumsalz und Mangannitrat als Mangansalz.

In einigen Ausführungsformen umfasst das Ausgangsfluid ein von Lithiumacetat abweichendes Lithiumsalz und/oder ein von Manganacetat abweichendes Mangansalz. Beispielsweise kann das Ausgangsfluid anstelle von Lithiumacetat Lithiumhydroxid oder Lithiumcarbonat als Lithiumsalz umfassen. Anstelle von Manganacetat kann das Ausgangsfluid beispielsweise ein Manganoxid als Mangansalz umfassen.

In einigen bevorzugten Ausführungsformen ist vorgesehen, dass das Ausgangsfluid wenigstens ein Dotierungsmetallsalz umfasst. Durch die Zugabe eines Dotierungsmetalls oder mehrerer Dotierungsmetalle können gezielt die Eigenschaften der Vorläuferverbindung bzw. des manganbasierten Lithium-Sorbens beeinflusst werden. Beispielsweise können durch ein Dotierungsmetall die Stabilität des manganbasierten Lithium-Sorbens und/oder die Selektivität des manganbasierten Lithium-Sorbens für Lithium gesteigert werden. Durch Sprühtrocknen des Ausgangsfluids kann zudem eine besonders gleichmäßige Verteilung des Dotierungsmetalls in dem Trocknungsgut, der Vorläuferverbindung bzw. dem manganbasierten Lithium-Sorbens erreicht werden. Vorzugsweise ist das Dotierungsmetallsalz in dem Ausgangsfluid gelöst. Dies ermöglicht eine homogene Verteilung des Dotierungsmetalls in dem Trocknungsgut, der Vorläuferverbindung bzw. dem manganbasierten Lithium-Sorbens. Vorzugsweise ist der Stoffmengenanteil des Dotierungsmetalls bezogen auf die Gesamtstoffmenge an Metall in dem Ausgangsfluid höchstens 10%, vorzugsweise höchstens 5%, besonders bevorzugt wenigstens 0,5% und höchstens 10%.

In einigen bevorzugten Ausführungsformen ist vorgesehen, dass das Ausgangsfluid als Dotierungsmetallsalz ein dreiwertiges Metallsalz, also ein Metallsalz, bei dem die Metallionen die Oxidationsstufe +3 aufweisen, oder ein vierwertiges Metallsalz, also ein Metallsalz, bei dem die Metallionen die Oxidationsstufe +4 aufweisen, umfasst. Vorzugsweise umfasst das Dotierungsmetallsalz ein Titansalz, ein Eisensalz, ein Nickelsalz und/oder ein Aluminiumsalz. Besonders bevorzugt umfasst das Ausgangsfluid als Dotierungsmetallsalz ein Titansalz. Durch die Dotierung kann die Stabilität der Vorläuferverbindung bzw. die Stabilität des Lithium-Sorbens gesteigert werden, bspw. im Hinblick auf das Auswaschen von Manganionen.

In einigen bevorzugten Ausführungsformen ist vorgesehen, dass das Ausgangsfluid mittels eines Heißgasstroms sprühgetrocknet wird, der eine Trocknungstemperatur von wenigstens 150 °C und höchstens 350 °C aufweist. Durch einen Heißgasstrom mit einer solchen Trocknungstemperatur kann ein Trocknungsgut mit vorteilhaften Eigenschaften erhalten werden, insbesondere im Hinblick auf die Partikelform und die spezifische Oberfläche der Trocknungsgutpartikel.

In einigen bevorzugten Ausführungsformen ist vorgesehen, dass die Lithiummanganoxid-Partikel mittels eines Bindemittels granuliert werden. Die Lithiummanganoxid-Partikel werden also mittels des Bindemittels zu größeren Granulaten bzw. Agglomeraten verbunden. Dadurch kann die Handhabbarkeit der Lithiummanganoxid-Partikel gesteigert werden, beispielsweise deren Schüttfähigkeit. Vorzugsweise umfasst das Granulieren der Lithiummanganoxid-Partikel das Suspendieren der Lithiummanganoxid-Partikel in einem bindemittelhaltigen Granulierungsfluid und das anschließende Sprühtrocknen des bindemittelhaltigen Granulierungsfluids mitsamt der darin suspendierten Lithiummanganoxid-Partikel. Vorzugsweise ist das Bindemittel in dem Graduierungsfluid gelöst. Vorzugsweise wird als Bindemittel ein organisches Polymer verwendet, besonders bevorzugt Polyvinylchlorid (PVC).

Erfindungsgemäß ist außerdem ein Verfahren zur Herstellung eines manganbasiertes Lithium-Sorbens mit den Merkmalen des Anspruchs 13 vorgesehen.

Das erfindungsgemäße Verfahren zur Herstellung des manganbasierten Lithium-Sorbens umfasst das Herstellen einer Vorläuferverbindung durch ein wie vorstehend beschriebenes Verfahren. Das Verfahren zur Herstellung des manganbasierten Lithium-Sorbens umfasst außerdem das Waschen der Vorläuferverbindung mit einem Elutionsfluid, wobei ein Wasserstoffmanganoxid-Partikel umfassendes manganbasiertes Lithium-Sorbens erhalten wird. Durch das Waschen der Vorläuferverbindung mit dem Elutionsfluid werden also in den Lithiummanganoxid-Partikeln enthaltene Lithiumionen durch Wasserstoffionen ausgetauscht. Vorzugsweise weisen die Wasserstoffmanganoxid-Partikel die allgemeine Summenformel HₓMn_{2-x/4}O₄ auf. Je nach Oxidationsstufe des Mangans in den Wasserstoffmanganoxid-Partikeln kann jedoch auch eine davon abweichende Summenformel resultieren. Vorzugsweise beträgt die Oxidationsstufe von Mangan in den Wasserstoffmanganoxid-Partikeln zwischen +3,8 und +4,0. Die Herstellung der Vorläuferverbindung durch das wie vorstehend beschriebene Verfahren führt letztlich zu einem manganbasierten Lithium-Sorbens mit besonders vorteilhaften Eigenschaften. Insbesondere ist das erhaltene manganbasierte Lithium-Sorbens in Extraktionsverfahren weitgehend resistent gegenüber einem Auswaschen von Mangan.

In einigen bevorzugten Ausführungsformen ist vorgesehen, dass als Elutionsfluid ein säurehaltiges Elutionsfluid verwendet wird. In einem säurehaltigen Elutionsfluid ist eine gesteigerte Konzentration an Wasserstoffionen vorhanden, sodass ein rascher Austausch von Lithiumionen durch Wasserstoffionen erreicht werden kann. Vorzugsweise umfasst das säurehaltige Elutionsfluid wenigstens eine Mineralsäure, insbesondere Salzsäure, und/oder wenigstens eine organische Säure, insbesondere Essigsäure.

In einigen bevorzugten Ausführungsformen ist vorgesehen, dass die Wasserstoffmanganoxid-Partikel mittels eines Bindemittels granuliert werden. Die Wasserstoffmanganoxid-Partikel werden also mittels des Bindemittels zu größeren Granulaten bzw. Agglomeraten verbunden. Dadurch kann die Handhabbarkeit der Wasserstoffmanganoxid-Partikel bzw. des manganbasierten Lithium-Sorbens gesteigert werden, beispielsweise dessen Schüttfähigkeit. Vorzugsweise umfasst das Granulieren der Wasserstoffmanganoxid-Partikel das Suspendieren der Wasserstoffmanganoxid-Partikel in einem bindemittelhaltigen Granulierungsfluid und das anschließende Sprühtrocknen des bindemittelhaltigen Granulierungsfluids mitsamt der darin suspendierten Wasserstoffmanganoxid-Partikel. Vorzugsweise ist das Bindemittel in dem Graduierungsfluid gelöst. Vorzugsweise wird als Bindemittel ein organisches Polymer verwendet, besonders bevorzugt Polyvinylchlorid (PVC).

Erfindungsgemäß ist außerdem eine Vorläuferverbindung für ein manganbasiertes Lithium-Sorbens mit den Merkmalen des Anspruchs 16 vorgesehen.

Die erfindungsgemäße Vorläuferverbindung umfasst Lithiummanganoxid-Partikel, vorzugsweise Lithiummanganoxid-Kristallite, die dreidimensional geformt sind. Eine mittlere Partikelgröße der Lithiummanganoxid-Partikel beträgt höchstens 30 um. Vorzugsweise ist die Vorläuferverbindung hergestellt durch ein wie vorstehend beschriebenes Verfahren zur Herstellung einer Vorläuferverbindung für ein manganbasiertes Lithium-Sorbens.

Die erfindungsgemäße Vorläuferverbindung führt letztlich zu einem manganbasierten Lithium-Sorbens mit besonders vorteilhaften Eigenschaften. Dies wird nachstehend im Zusammenhang mit dem manganbasierten Lithium-Sorbens noch näher erläutert.

Wie hierin verwendet ist mit der mittleren Partikelgröße der Medianwert der Partikelgröße gemeint. Vorzugsweise ist die Partikelgröße durch Laserbeugungs-Partikelgrößenanalyse ermittelt. Dabei handelt es sich um ein Verfahren, bei dem eine dispergierte Partikelprobe mit einem Laserstrahl bestrahlt und die winkelabhängige Intensität des Lichts nach Durchgang durch die Partikelprobe gemessen wird. Große Partikel streuen Licht bei kleinen Winkeln relativ zum Laserstrahl. Kleinere Partikel streuen Licht bei verglichen damit größeren Winkeln.

Wie hierin verwendet bezieht sich die spezifische Oberfläche auf gemäß DIN ISO 9277 (BET-Verfahren) in ihrer Fassung vom Januar 2014 ermittelte Werte.

Partikel erstrecken sich grundsätzlich in drei Dimensionen.

Bei dreidimensionalen Partikeln ist die Erstreckung in jede der drei Dimensionen in derselben Größenordnung. Beispielsweise handelt es sich bei kugelförmigen Partikeln, oktaedrischen Partikeln oder würfelförmigen Partikeln um dreidimensionale Partikel. Besonders bevorzugt sind die Lithiummanganoxid-Partikel kubisch geformt.

Davon abzugrenzen sind zweidimensionale und eindimensionale Partikel. Bei zweidimensionalen Partikeln ist die Erstreckung in zwei der Dimensionen in einer größeren Größenordnung als die Erstreckung in die verbleibende dritte Dimension. Folglich sind zweidimensionale Partikel flach bzw. plattenförmig. Bei eindimensionalen Partikeln ist die Erstreckung in eine der Dimensionen in einer größeren Größenordnung als die Erstreckung in die beiden verbleibenden Dimensionen. Folglich sind eindimensionale Partikel nadelförmig.

Vorzugsweise ist die allgemeine Summenformel der Lithiummanganoxid-Partikel LiₓMn_{2-x/4}O₄. Je nach durchschnittlicher Oxidationsstufe des Mangans in den Lithiummanganoxid-Partikeln können die Lithiummanganoxid-Partikel auch eine davon abweichende allgemeine Summenformel aufweisen. Besonders bevorzugt ist die allgemeine Summenformel der Lithiummanganoxid-Partikel Li_{1.6}Mn_{1.6}O₄.

Vorzugsweise weisen die Lithiummanganoxid-Partikel eine Kristallstruktur vom Spinneltyp auf.

Vorzugsweise beträgt die mittlere Partikelgröße der Lithiummanganoxid-Partikel höchstens 15 µm.

Vorzugsweise weisen die Lithiummanganoxid-Partikel eine spezifische Oberfläche von wenigstens 0,5 m²/g und höchstens 10 m²/g auf.

Vorzugsweise weisen die Lithiummanganoxid-Partikel wenigstens ein Dotierungsmetall auf, besonders bevorzugt Titan.

Erfindungsgemäß ist außerdem ein manganbasiertes Lithium-Sorbens mit den Merkmalen des Anspruchs 17 vorgesehen.

Das erfindungsgemäße manganbasierte Lithium-Sorbens umfasst Wasserstoffmanganoxid-Partikel, vorzugsweise

Wasserstoffmanganoxid-Kristallite, die dreidimensional geformt sind. Eine mittlere Partikelgröße der Wasserstoffmanganoxid-Partikel beträgt höchstens 30 um. Vorzugsweise weisen die Wasserstoffmanganoxid-Partikel eine spezifische Oberfläche von höchstens 10 m²/g auf. Vorzugsweise ist das manganbasierte Lithium-Sorbens hergestellt durch ein wie vorstehend beschriebenes Verfahren zur Herstellung eines manganbasierten Lithium-Sorbens.

Die erfindungsgemäßen Wasserstoffmanganoxid-Partikel eignen sich in besonderem Maße für die Extraktion von Lithium aus Fluiden. Überraschenderweise hat sich gezeigt, dass die erfindungsgemäßen Wasserstoffmanganoxid-Partikeln weitgehend resistent gegenüber einem Auswaschen von Mangan sind. Es wird angenommen, dass dies insbesondere durch die dreidimensionale Form der Wasserstoffmanganoxid-Partikel begründet ist. Folglich weisen die erfindungsgemäßen Wasserstoffmanganoxid-Partikel eine hohe Stabilität auf, sodass sich deren Aufnahmefähigkeit für Lithiumionen über mehrere Extraktionszyklen hinweg nur wenig verringert.

Besonders bevorzugt sind die Wasserstoffmanganoxid-Partikel kubisch geformt.

Vorzugsweise ist die allgemeine Summenformel der Wasserstoffmanganoxid-Partikel HₓMn_{2-x/4}O₄. Je nach durchschnittlicher Oxidationsstufe des Mangans in den Wasserstoffmanganoxid-Partikeln können die Wasserstoffmanganoxid-Partikel auch eine davon abweichende allgemeine Summenformel aufweisen. Besonders bevorzugt ist die Summenformel der Wasserstoffmanganoxid-Partikel H_{1.6}Mn_{1.6}O₄. Vorzugsweise weisen die Wasserstoffmanganoxid-Partikel eine Kristallstruktur vom Spinneltyp auf.

Vorzugsweise beträgt die mittlere Partikelgröße der Wasserstoffmanganoxid-Partikel höchstens 15 um.

Vorzugsweise weisen die Wasserstoffmanganoxid-Partikel eine spezifische Oberfläche von wenigstens 0,5 m²/g und höchstens 10 m²/g auf.

Vorzugsweise weisen die Wasserstoffmanganoxid-Partikel wenigstens ein Dotierungsmetall auf, besonders bevorzugt Titan.

Im Folgenden wird die Erfindung anhand der Zeichnungen näher erläutert. Es zeigen:
- Figur 1: eine Anlage zur Herstellung eines manganbasierten Lithium-Sorbens;
- Figur 2: ein Verfahren zur Herstellung eines manganbasierten Lithium-Sorbens;
- Figur 3: ein SEM-Bild einer Vorläuferverbindung für ein manganbasiertes Lithium-Sorbens; und
- Figur 4: ein SEM-Bild eines manganbasierten Lithium-Sorbens.

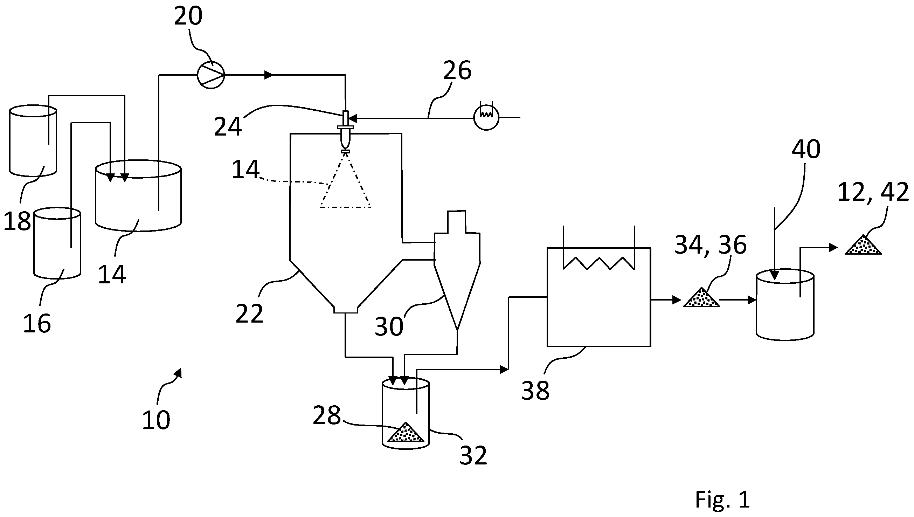

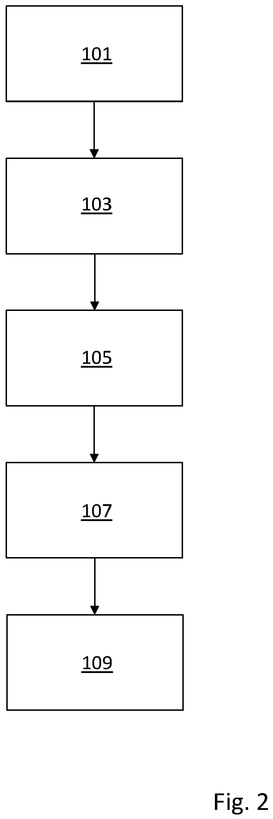

Figur 1 zeigt eine Anlage 10 zur Herstellung eines manganbasierten Lithium-Sorbens 12. Im Folgenden wird mit Bezug auf die Anlage 10 ein Verfahren zur Herstellung des manganbasierten Lithium-Sorbens 12 erläutert. Das Verfahren ist in Figur 2 anhand eines Flussdiagramms vereinfacht dargestellt.

In einem ersten Schritt 101 wird ein Ausgangsfluid 14 bereitgestellt, das wenigstens ein Lithiumsalz und wenigstens ein Mangansalz umfasst. Vorzugsweise umfasst das Ausgangsfluid 14 als Lithiumsalz Lithiumacetat und als Mangansalz Manganacetat. Vorzugsweise ist das Ausgangsfluid 14 ein wässriges Ausgangsfluid. Das Lithiumsalz und das Mangansalz können in dem Ausgangsfluid 14 gelöst vorliegen.

Bei dem in Figur 1 gezeigten Ausführungsbeispiel entspricht die Stoffmenge von Lithium in dem Ausgangsfluid 14 der Stoffmenge von Mangan in dem Ausgangsfluid 14. Das Stoffmengenverhältnis beträgt also 1:1. Alternativ dazu kann auch ein davon abweichendes Stoffmengenverhältnis vorgesehen sein, was letztlich zu einem manganbasierten Lithium-Sorbens 12 mit einer abweichenden Summenformel führt.

Bei der in Figur 1 dargestellten Anlage 10 werden zunächst ein das Lithiumsalz aufweisendes erstes Fluid 16 und ein das Mangansalz aufweisendes zweites Fluid 18 bereitgestellt. Das Ausgangsfluid 14 wird durch Zusammenführen der Fluide 16 und 18 erhalten.

Das Ausgangsfluid 14 kann zusätzlich zu dem Lithiumsalz und dem Mangansalz wenigstens ein Dotierungsmetallsalz umfassen. Vorzugsweise umfasst das Ausgangsfluid 14 als Dotierungsmetallsalz ein Titansalz. Das Dotierungsmetallsalz kann in dem Ausgangsfluid 14 gelöst vorliegen.

In einem zweiten Schritt 103 wird das Ausgangsfluid 14 sprühgetrocknet. Hierzu wird das Ausgangsfluid 14 durch eine Förderpumpe 20 einer Trocknungskammer 22 zugeführt und durch einen Zerstäuber 24 in die Trocknungskammer 22 eingesprüht.

In der Trocknungskammer 22 wird das Ausgangsfluid 14 durch einen Heißgasstrom 26 getrocknet. Als Heißgasstrom kann beispielsweise ein Stickstoffstrom verwendet werden. Vorzugsweise weist der Heißgasstrom 26 beim Eintritt in die Trocknungskammer 22 eine Trocknungstemperatur von wenigstens 150 °C und höchstens 350 °C auf. Bei dem in Figur 1 gezeigten Ausführungsbeispiel beträgt die Trocknungstemperatur 300 °C.

Durch die Sprühtrocknung wird ein lithiumhaltiges und manganhaltiges Trocknungsgut 28 erhalten. Das Trocknungsgut 28 sedimentiert in der Trocknungskammer 22 oder in einem der Trocknungskammer 22 nachgeschalteten Zyklonabscheider 30 und wird in einem Behälter 32 gesammelt. Durch die Sprühtrocknung kann ein Trocknungsgut 28 erhalten werden, in dem Lithium, Mangan und das optionale Dotierungsmetall homogen verteilt vorliegen.

In einem dritten Schritt 105 wird das Trocknungsgut 28 bei einer vorgegebenen Kalzinierungstemperatur von wenigstens 300 °C kalziniert. In diesem Ausführungsbeispiel beträgt die vorgegebene Kalzinierungstemperatur 450 °C. Die Kalzinierung findet in einer oxidierenden Atmosphäre statt, beispielsweise in Luft. Die Kalzinierung kann in einem Ofen 38 durchgeführt werden. Durch die Kalzinierung wird das Trocknungsgut 28 oxidiert, sodass eine Lithiummanganoxid-Partikel 34 umfassende Vorläuferverbindung 36 für das manganbasierte Lithium-Sorbens 12 erhalten wird.

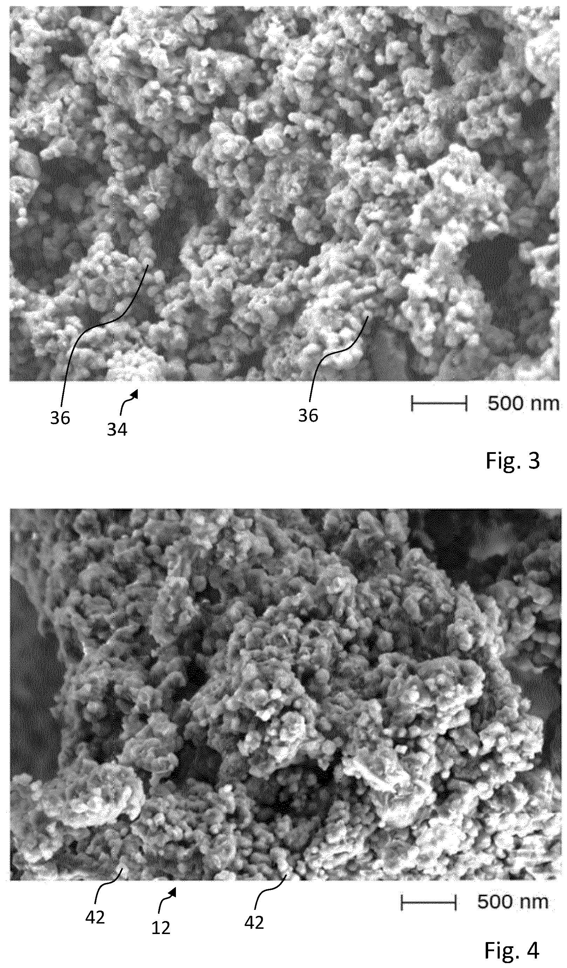

Figur 3 zeigt ein SEM-Bild (SEM = scanning electron microscope; zu Deutsch: Rasterelektronenmikroskop) der Vorläuferverbindung 36. Die Lithiummanganoxid-Partikel 34 haben die allgemeine Summenformel LiₓMn_{2-x/4}O₄. In Anbetracht des vorliegend gewählten Stoffmengenverhältnisses von Lithium zu Mangan haben die Lithiummanganoxid-Partikel 34 die Summenformel Li_{1.6}Mn_{1.6}O₄. Die Lithiummanganoxid-Partikel 34 liegen als Lithiummanganoxid-Kristallite 34 in einer Kristallstruktur von Spinneltyp vor.

Wie aus Figur 3 erkenntlich ist, sind die Lithiummanganoxid-Partikel 34 dreidimensional geformt und haben eine durchschnittliche Partikelgröße von weniger als 30 *µ*m. Vorliegend sind die Lithiummanganoxid-Partikel 34 kubisch geformt. Die Lithiummanganoxid-Partikel 34 bzw. die Vorläuferverbindung 34 weisen vorzugsweise eine spezifische Oberfläche von höchstens 10 m²/g auf.

Die vorstehenden Eigenschaften der Lithiummanganoxid-Partikel 34 (Kristallstruktur vom Spinneltyp, dreidimensionale Form, durchschnittliche Partikelgröße und spezifische Oberfläche) resultieren insbesondere aus den vorausgehenden Verfahrensschritten, nämlich dem Sprühtrocknen des Ausgangsfluids 14 und dem anschließenden Kalzinieren des Trocknungsguts 28.

In einem vierten Schritt 107 wird die Vorläufersubstanz 34 mit einem wässrigen Elutionsfluid 40 gewaschen. Dies hat zur Folge, dass Lithiumionen der Vorläuferverbindung 34 durch in dem Elutionsfluid 40 enthaltene Wasserstoffionen ersetzt werden. Es findet also ein Ionenaustausch statt. Dadurch wird ein Wasserstoffmanganoxid-Partikel 42 umfassendes manganbasiertes Lithium-Sorbens 12 erhalten. Vorzugsweise wird als Elutionsfluid 40 ein säurehaltiges Elutionsfluid verwendet. Beispielsweise kann das säurehaltige Elutionsfluid wenigstens eine Mineralsäure, insbesondere Salzsäure, und/oder wenigstens eine organische Säure, insbesondere Essigsäure, enthalten.

Figur 4 zeigt ein SEM-Bild des manganbasierten Lithium-Sorbens 12. Die Wasserstoffmanganoxid-Partikel 42 haben die allgemeine Summenformel HₓMn_{2-x/4}O₄. In Anbetracht des vorliegend gewählten Stoffmengenverhältnisses von Lithium zu Mangan haben die Wasserstoffmanganoxid-Partikel 42 die Summenformel H_{1.6}Mn_{1.6}O₄. Die Wasserstoffmanganoxid-Partikel 42 liegen als Wasserstoffmanganoxid-Kristallite 42 in einer Kristallstruktur vom Spinneltyp vor.

Wie aus Figur 4 erkenntlich ist, sind die Wasserstoffmanganoxid-Partikel 42 dreidimensional geformt und haben eine durchschnittliche Partikelgröße von weniger als 30 *µ*m. Vorliegend sind die Wasserstoffmanganoxid-Partikel 42 kubisch geformt. Die Wasserstoffmanganoxid-Partikel 42 bzw. das Lithium-Sorbens 12 weisen vorzugsweise eine spezifische Oberfläche von höchstens 10 m²/g auf.

Die Form der Partikel wird durch den vierten Schritt 107 allenfalls geringfügig beeinflusst. Die Wasserstoffmanganoxid-Partikel 42 weisen im wesentlichen dieselbe Form auf wie die Lithiummanganoxid-Partikel 34.

Die Wasserstoffmanganoxid-Partikel 42 sind für die Extraktion von Lithium aus Sole besonders vorteilhaft.

Überraschenderweise hat sich herausgestellt, dass während der Extraktion oder während anschließenden Waschvorgängen nur wenig Mangan verloren geht. Die Wasserstoffmanganoxid-Partikel 42 behalten also ihre Kapazität für Lithiumionen über mehrere Extraktionszyklen hinweg im Wesentlichen bei.

In einem optionalen fünften Schritt 109 werden die Wasserstoffmanganoxid-Partikel 42 mittels eines Bindemittels granuliert. Die Wasserstoffmanganoxid-Partikel 42 werden also mittels des Bindemittels zu größeren Granulaten bzw. Agglomeraten verbunden. Vorzugsweise wird als Bindemittel ein organisches Polymer verwendet, besonders bevorzugt Polyvinylchlorid (PVC).

## Patentansprüche

1. Verfahren zur Herstellung einer Vorläuferverbindung (34) für ein manganbasiertes Lithium-Sorbens (12), umfassend:
a) Bereitstellen eines, insbesondere wässrigen, Ausgangsfluids (14), das wenigstens ein Lithiumsalz und wenigstens ein Mangansalz umfasst,
b) Sprühtrocknen des Ausgangsfluids (14), wobei ein lithiumhaltiges und manganhaltiges Trocknungsgut (28) erhalten wird,
c) Kalzinieren des Trocknungsguts (28), sodass eine Lithiummanganoxid-Partikel (36) umfassende Vorläuferverbindung (34) für ein manganbasiertes Lithium-Sorbens (12) erhalten wird.

2. Verfahren nach Anspruch 1, **dadurch gekennzeichnet, dass** das Trocknungsgut (28) derart kalziniert wird, dass die durchschnittliche Oxidationsstufe von Mangan in der Vorläuferverbindung (34) zwischen +3,8 und +4,0 beträgt, vorzugsweise zwischen +3,9 und +4,0.

3. Verfahren nach einem der vorhergehenden Ansprüche,
**dadurch gekennzeichnet, dass** das Stoffmengenverhältnis von Lithium zu Mangan in dem Ausgangsfluid (14) zwischen 0,6:1 und 1,4:1 beträgt, vorzugsweise zwischen 0,8:1 und 1,2:1.

4. Verfahren nach einem der vorhergehenden Ansprüche,
**dadurch gekennzeichnet, dass** das Trocknungsgut (28) bei einer vorgegebenen Kalzinierungstemperatur von wenigstens 300 °C, vorzugsweise wenigstens 350 °C, kalziniert wird.

5. Verfahren nach dem vorhergehenden Anspruch, **dadurch gekennzeichnet, dass** die vorgegebene Kalzinierungstemperatur wenigstens 400 °C und höchstens 500 °C beträgt, vorzugsweise wenigstens 430 °C und höchstens 470 °C.

6. Verfahren nach Anspruch 4, **dadurch gekennzeichnet, dass** die vorgegebene Kalzinierungstemperatur wenigstens 600 °C und höchstens 800 °C beträgt.

7. Verfahren nach einem der vorhergehenden Ansprüche, **dadurch gekennzeichnet, dass** das Ausgangsfluid (14) Lithiumacetat oder Lithiumnitrat als Lithiumsalz umfasst, und/oder dass das Ausgangsfluid (14) Manganacetat oder Mangannitrat als Mangansalz umfasst.

8. Verfahren nach einem der vorhergehenden Ansprüche, **dadurch gekennzeichnet, dass** das Lithiumsalz in dem Ausgangsfluid (14) gelöst ist, und/oder dass das Mangansalz in dem Ausgangsfluid (14) gelöst ist.

9. Verfahren nach einem der vorhergehenden Ansprüche, **dadurch gekennzeichnet, dass** das Ausgangsfluid (14) wenigstens ein Dotierungsmetallsalz umfasst.

10. Verfahren nach dem vorhergehenden Anspruch, **dadurch gekennzeichnet, dass** das Ausgangsfluid (14) als Dotierungsmetallsalz ein dreiwertiges Metallsalz oder ein vierwertiges Metallsalz umfasst.

11. Verfahren nach einem der vorhergehenden Ansprüche,
**dadurch gekennzeichnet, dass** das Ausgangsfluid (14) mittels eines Heißgasstroms (26) sprühgetrocknet wird, der eine Trocknungstemperatur von wenigstens 150 °C und höchstens 350 °C aufweist.

12. Verfahren nach einem der vorhergehenden Ansprüche, **dadurch gekennzeichnet, dass** die Lithiummanganoxid-Partikel (36) mittels eines Bindemittels granuliert werden.

13. Verfahren zur Herstellung eines manganbasierten Lithium-Sorbens (12), umfassend:
a) Herstellen einer Vorläuferverbindung (34) durch ein Verfahren gemäß einem der Ansprüche 1 bis 12,
b) Waschen der Vorläuferverbindung (42) mit einem, insbesondere wässrigen, Elutionsfluid (40), wobei ein Wasserstoffmanganoxid-Partikel (42) umfassendes manganbasiertes Lithium-Sorbens (12) erhalten wird.

14. Verfahren nach dem vorhergehenden Anspruch, **dadurch gekennzeichnet, dass** als Elutionsfluid (40) ein säurehaltiges Elutionsfluid verwendet wird.

15. Verfahren nach einem der Ansprüche 13 und 14, **dadurch gekennzeichnet, dass** die Wasserstoffmanganoxid-Partikel (42) mittels eines Bindemittels granuliert werden.

16. Vorläuferverbindung (34) für ein manganbasiertes Lithium-Sorbens (12), insbesondere hergestellt durch ein Verfahren gemäß einem der Ansprüche 1 bis 12, umfassend:
- Lithiummanganoxid-Partikel (36), vorzugsweise mit der allgemeinen Summenformel LiₓMn_{2-x/4}O₄, wobei:
- die Lithiummanganoxid-Partikel (36) dreidimensional, vorzugsweise kubisch, geformt sind, und
- eine mittlere Partikelgröße der Lithiummanganoxid-Partikel (36) höchstens 30 *µ*m beträgt, vorzugsweise höchstens 15 *µ*m.

17. Manganbasiertes Lithium-Sorbens (12), insbesondere hergestellt durch ein Verfahren gemäß einem der Ansprüche 13 bis 15, umfassend:
- Wasserstoffmanganoxid-Partikel (42), vorzugsweise mit der allgemeinen Summenformel HₓMn_{2-x/4}O₄, wobei:
die Wasserstoffmanganoxid-Partikel (42) dreidimensional, vorzugsweise kubisch, geformt sind, und
- eine mittlere Partikelgröße der Wasserstoffmanganoxid-Partikel (42) höchstens 30 *µ*m beträgt, vorzugsweise höchstens 15 *µ*m.
